# EUROPÄISCHE PATENTSCHRIFT

(11) **EP 3 626 504 B1**
(45) Veröffentlichungstag und Bekanntmachung des Hinweises auf die Patenterteilung: **18.06.2025**
(21) Anmeldenummer: 19196852.8
(22) Anmeldetag: 12.09.2019
(51) Int. Cl.: G01D 7/04, B60K 35/10, B60K 35/21, B60K 35/22, B60K 35/23, B60K 35/28, B60K 35/81, B60K 35/90

(54) **VORRICHTUNG ZUM WAHLWEISE REDUZIERTEN ANZEIGEN EINER MESSGRÖSSE**
DEVICE FOR SELECTIVELY REDUCED DISPLAY OF A MEASURED QUANTITY
DISPOSITIF POUR AFFICHAGE SÉLECTIVEMENT RÉDUIT D'UNE GRANDEUR DE MESURE

(30) Priorität: 18.09.2018 DE 102018122834
(43) Veröffentlichungstag der Anmeldung: 25.03.2020
(73) Patentinhaber: MAN Truck & Bus SE, 80995 München (DE)
(72) Erfinder: Mohra, Holger, 80805 München (DE); Kim, Zie-Na, 80337 München (DE); Aydemir, Fatih, 81539 München (DE); Ochs, Thomas, 82178 Puchheim (DE)
(74) Vertreter: v. Bezold & Partner Patentanwälte - PartG mbB

(56) Entgegenhaltungen:
- EP-A1- 2 813 399
- EP-A1- 3 366 505
- US-A- 4 308 527
- US-A1- 2008 309 475

## Beschreibung

Die vorliegende Erfindung betrifft eine Vorrichtung zum Anzeigen einer Messgröße an einem Fahrerplatz eines Fahrzeugs, insbesondere eines Kraftfahrzeugs.

Herkömmliche Zeigerinstrumente, einschließlich solcher die ausschließlich digital an einem hochauflösenden Bildschirm angezeigt werden, können eine Messgröße des Fahrbetriebs übersichtlich darstellen. Möchte eine Fahrerin oder ein Fahrer zusätzliche Informationen zu dieser Messgröße angezeigt bekommen, erfordert dies herkömmlicherweise ein Informationsfeld, das beispielsweise eine Ursache oder eine Beurteilung zu dem angezeigten Wert der Messgroße ergänzt. Dadurch nimmt jedoch die Komplexität der Darstellung zu, so dass die Fahrerin oder der Fahrer auf die beiden Anzeigen jeweils und damit länger auf das Kombi-Instrument blicken muss und dadurch von der Fahraufgabe abgelenkt ist. Zudem ist der wechselseitige Bezug zwischen der Anzeige des Wertes der Messgröße und der Anzeige der zusätzlichen Information zur Messgröße unklar.

Dokument EP 2 813 399 A1 offenbart ein Verfahren zum Anzeigen einer verfügbaren Reichweite eines Hybridfahrzeugs, wobei ein Hauptbild einen ersten Sektor, der die Reichweite unter Verwendung eines fossilen Brennstoffs anzeigt, und einen zweiten Sektor, der die Reichweite unter Verwendung einer alternativen Energiequelle anzeigt, umfasst. Ein zusätzliches Bild stellt eine Vergrößerung des zweiten Sektors dar.

Dokument US 4 308 527 A offenbart eine Instrumententafel mit Mitteln zur Anzeige der Geschwindigkeit des Fahrzeugs, bestehend aus horizontalen, übereinanderliegenden Skalen. Die Skalen werden in bestimmten Geschwindigkeitsbereichen aktiviert, sodass die aktivierte Skala bei höheren Geschwindigkeiten im Sichtfeld des Fahrers höher dargestellt ist. Die Länge der Geschwindigkeitsanzeigeskalen ist umgekehrt proportional zu ihrer Höhe im Sichtfeld des Fahrers.

Dokument US 2008/309475 A1 offenbart einen ersten Darstellmodus, in dem eine allgemeine Bildfunktionskomponente derart dargestellt ist, dass wenigstens ein Teil eines Bereichs einer zweiten spezifischen Bildfunktionskomponente belegt ist. In einem zweiten Darstellmodus wird die gemeinsame Bildfunktionskomponente kontinuierlich außerhalb der zweiten spezifischen Bildfunktionskomponente dargestellt, um eine Überlappung zwischen diesen zu vermeiden.

Dokument EP 3 366 505 A1 offenbart ein Verfahren und ein System zur Abfahrtskontrolle eines Kraftfahrzeugs. Auf einer Anzeigefläche wird eine Abfahrtskontrollanzeige vor Abfahrt des Kraftfahrzeugs eingeblendet. Die Abfahrtskontrollanzeige umfasst eine Zustandsanzeige zumindest eines Vorratsdrucks eines Druckluftkreises, einer Öltemperatur und einer Kühlmitteltemperatur des Kraftfahrzeugs. Die Zustandsanzeige des Vorratsdruck wird ausgeblendet, nachdem der Vorratsdruck einen Sollwert erreicht hat. Ferner wird die Abfahrtskontrollanzeige nach Abfahrt des Kraftfahrzeugs ausgeblendet, wenn zumindest die Öltemperatur einen Sollwert und die Kühlmitteltemperatur einen Sollwert überschritten hat.

Somit besteht die Aufgabe, eine Vorrichtung anzugeben, die nicht nur eine Messgröße des Fahrbetriebs anzeigt, sondern wahlweise auch Zusatzinformationen zur Messgröße anzeigt, ohne eine Fahrerin oder einen Fahrer dadurch zusätzlich von der Fahraufgabe abzulenken.

Diese Aufgabe wird durch eine Anzeigevorrichtung und ein entsprechendes Nutzfahrzeug mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem Aspekt ist eine Vorrichtung zum Anzeigen einer Messgröße an einem Fahrerplatz eines Fahrzeugs bereitgestellt. Das Fahrzeug ist vorzugsweise ein Kraftfahrzeug, insbesondere ein Nutzfahrzeug. Die Vorrichtung umfasst eine Anzeige, die dazu ausgebildet ist, eine erste Skala der Messgröße und wahlweise ein Informationsfeld benachbart zur ersten Skala anzuzeigen. Ferner umfasst die Vorrichtung eine zum Steuern der Anzeige mit der Anzeige in Signalaustausch stehende oder bringbare Steuerung. Die Steuerung ist dazu ausgebildet, einen Zahlenwert der Messgröße zu erfassen, in einem ersten Modus auf der ersten Skala den Zahlenwert anzuzeigen, und in einem zweiten Modus, zusätzlich zum Anzeigen des Zahlenwerts auf der ersten Skala, im Informationsfeld auf einer von der ersten Skala beabstandeten zweiten Skala den Zahlenwert anzuzeigen. Das Anzeigen des Zahlenwerts auf der zweiten Skala entspricht einer geometrischen Fortsetzung des Anzeigens des Zahlenwerts auf der ersten Skala.

Die zweite Skala kann eine echte Teilmenge oder einen Ausschnitt der ersten Skala umfassen.

Das Anzeigen des Zahlenwerts auf der ersten Skala im ersten Modus ermöglicht eine klare und übersichtliche Darstellung der Messgröße. Beispielsweise ermöglicht der erste Modus eine kontinuierliche Darstellung der Messgröße am Fahrerplatz, ohne die Fahrerin oder den Fahrer von der Fahraufgabe abzulenken.

Das Anzeigen des Zahlenwerts der Messgröße innerhalb des Informationsfelds auf der zweiten Skala stellt den Zusammenhang zwischen einer zusätzlichen Information im Informationsfeld und dem Zahlenwert unmittelbar her, so dass eine Zusatzinformation im Informationsfeld auf einen Blick als zur Messgröße gehörend erfassbar ist, ohne die Fahrerin oder den Fahrer zusätzlich von der Fahraufgabe abzulenken.

Die geometrische Fortsetzung stellt einen direkten Bezug zwischen der ersten Skala und der zweiten Skala sowie dem darauf übereinstimmend angezeigten Zahlenwert der Messgröße her, so dass die Kombination der ersten und zweiten Skalen als eine größere Skala erscheint, ohne dass die Fahrerin oder der Fahrer die beiden Skalen jeweils betrachten müsste. Ferner wird durch die geometrische Fortsetzung der Blick von der ersten Skala, auf welcher die Messgröße bereits im ersten Modus angezeigt ist, geleitet in das benachbarte Informationsfeld, in welchem im zweiten Modus die Zusatzinformation zur Messgröße angezeigt werden kann.

Durch das wahlweise Anzeigen der Messgröße im Informationsfeld im zweiten Modus kann eine hinsichtlich des Detaillierungsgrads dynamische Skalenanzeige erreicht werden.

Das Fahrzeug kann ein Landfahrzeug oder ein Wasserfahrzeug sein. Das Fahrzeug kann ein Kraftfahrzeug, vorzugsweise ein Nutzfahrzeug sein, insbesondere ein Bus, ein Lastkraftwagen oder eine Zugmaschine.

Die erste Skala und die zweite Skala (beispielsweise jeweils eine angezeigte oder implizite Achse entlang welcher der Zahlenwert der Messgröße abgetragen wird oder angezeigt ist) können gekrümmt sein. Beispielsweise können die erste Skala und die zweite Skala jeweils auf einem Kreisbogen angeordnet sein oder sich jeweils entlang eines Kreisbogens erstrecken. Die geometrische Fortsetzung kann einer radialen Fortsetzung entsprechen. Beispielsweise können die erste Skala und die zweite Skala konzentrisch sein. Dabei können die erste Skala und die zweite Skala jeweils auf einem Kreisbogen angeordnet sein, deren Radien unterschiedlich sind und/oder deren Kreismittelpunkte übereinstimmen (beispielsweise ohne dass der übereinstimmende Kreismittelpunkt angezeigt ist und/oder ohne dass der Kreismittelpunkt innerhalb der Anzeige liegt).

Alternativ oder ergänzend können die erste Skala und die zweite Skala geradlinig und/oder zueinander parallel (beispielsweise horizontal) sein. Die geometrische Fortsetzung kann einer zu den Skalen orthogonalen (beispielsweise vertikalen) Fortsetzung entsprechen.

Erfindungsgemäß steht ein Zeiger (z.B., ein Balken) des Zahlenwerts auf der ersten Skala in Flucht mit einem Zeiger des Zahlenwerts auf der zweiten Skala. Ergänzend kann eine den Zahlenwert repräsentierende Zeigerbewegung auf der ersten Skala (beispielsweise mit jedem Ausschlag) synchron auf der zweiten Skala angezeigt sein.

Die Steuerung kann ferner dazu ausgebildet sein, im zweiten Modus im Informationsfeld den Zahlenwert der Messgröße numerisch anzuzeigen und/oder eine Skalenbeschriftung einzublenden. Das numerische Anzeigen des Zahlenwerts und/oder die Skalenbeschriftung kann eine (z.B., physikalische) Einheit der Messgröße umfassen.

Alternativ oder ergänzend kann im zweiten Modus die Messgröße im Informationsfeld verbalisiert angezeigt sein. Im zweiten Modus kann sich das Informationsfeld auf die Messgröße beziehen. Das Informationsfeld kann im zweiten Modus weitere mit der Messgröße und/oder dem Zahlenwert in Zusammenhang stehende Informationen (z.B., die Zusatzinformationen) umfassen. Die Steuerung kann ferner dazu ausgebildet sein, im zweiten Modus im Informationsfeld einen der Messgröße und/oder dem Zahlenwert zugeordneten Inhalt (z.B., die Zusatzinformationen) anzuzeigen, beispielsweise eine Ursache oder eine Beurteilung zu dem angezeigten Zahlenwert.

Die Steuerung kann ferner dazu ausgebildet sein, im zweiten Modus im Informationsfeld eine dem Zahlenwert zugeordnete Kategorie anzuzeigen. Die angezeigten oder anzeigbaren Kategorien können mindestens eine der Folgenden umfassen: ökonomisch fahrend, unökonomisch fahrend, rekuperierend bremsend, dissipativ bremsend und/oder Energie-entnehmend beschleunigen (beispielsweise rekuperierte Energie entnehmend).

Die Steuerung kann ferner dazu ausgebildet sein, in einem dritten Modus, zusätzlich zum Anzeigen des Zahlenwerts auf der ersten Skala, im Informationsfeld mindestens eine von der Messgröße der ersten Skala verschiedene zweite Messgröße anzuzeigen. Dadurch ist es möglich, wenn im ersten Modus ein Ereignis auftritt, welches das Anzeigen der zweiten Messgröße erfordert, das Informationsfeld hierfür zu nutzen. Dadurch kann auf kompaktem Raum die für die Fahrerin oder den Fahrer wesentliche Information dargestellt werden. Beispielsweise kann die Messgröße auf der ersten Skala kontinuierlich auch im dritten Modus angezeigt bleiben, so dass die Aufmerksamkeit der Fahrerin oder des Fahrers ausschließlich auf das sich ändernde zweite Informationsfeld gelenkt wird.

Vorzugsweise umfasst das Informationsfeld im dritten Modus keine zweite Skala der Messgröße (d.h. der Messgröße, die auf der ersten Skala angezeigt ist). Dadurch kann die im zweiten Modus durch die geometrische Fortsetzung geschaffene Verbindung zwischen der Messgröße der ersten Skala und dem Informationsfeld im dritten Modus aufgehoben werden. Das Informationsfeld kann somit einer eigenständigen Nutzung zur Verfügung stehen, insbesondere für eine von der auf der ersten Skala angezeigten Messgröße unabhängigen zweiten Messgröße.

Alternativ oder ergänzen kann im dritten Modus die zweite Messgröße im Informationsfeld numerisch angezeigt sein und/oder kann im dritten Modus eine der zweiten Messgröße zugeordnete Kategorie im Informationsfeld angezeigt sein.

Im ersten Modus kann das Informationsfeld leer sein. Dadurch kann der erste Modus eine klare oder ruhige Darstellung ermöglichen.

Die Steuerung kann ferner dazu ausgebildet sein, in Reaktion auf eine Eingabe der Fahrerin und/oder des Fahrers zwischen den Modi (beispielsweise zwischen dem ersten und zweiten Modus und/oder zwischen dem zweiten und dritten Modus) umzuschalten. Dadurch kann die Zusatzinformation im Informationsfeld bei Bedarf durch die Fahrerin und/oder den Fahrer (beispielweise ausschließlich in Reaktion auf die Eingabe der Fahrerin und/oder des Fahrers) angezeigt werden.

Die Steuerung kann ferner dazu ausgebildet sein, das Informationsfeld im zweiten und/oder dritten Modus zu konfigurieren, beispielsweise in Reaktion auf die Eingabe der Fahrerin und/oder des Fahrers (auch: Benutzereingabe). Das Informationsfeld kann auch als konfigurierbarer Anzeigenbereich bezeichnet werden.

Die erste Skala und/oder die zweite Skala können diskrete Werte der Messgröße umfassen. Die Steuerung kann dazu ausgebildet sein, den Zahlenwert mittels eines Zeigers (z.B., eines Balkens) am dem Zahlenwert entsprechenden diskreten Wert der ersten Skala und/oder der zweiten Skala anzuzeigen.

Die Anzeige kann an einem Kombi-Instrument und/oder einer Mittelkonsole angeordnet oder anordenbar sein. Alternativ oder ergänzend kann die Anzeige eine Head-Up-Anzeige umfassen oder nutzen.

Der angezeigte Zahlenwert kann ein Ist-Wert sein. Optional kann auf der ersten Skala, der zweiten Skala und/oder zwischen der ersten und zweiten Skala eine Zeitabhängigkeit der Messgröße angezeigt sein. Die Zeitabhängigkeit kann eine Veränderung des Ist-Wertes bezüglich eines früheren (beispielsweise früher angezeigten) Zahlenwertes der Messgröße umfassen. Die Zeitabhängigkeit, insbesondere die Veränderung, kann sich auf eine vorbestimmte Zeitdauer beziehen. Beispielsweise können Veränderungen als die Zeitabhängigkeit angezeigt sein, sofern sie nicht länger als die vorbestimmte Zeitdauer zurückliegen.

Die Steuerung kann dazu ausgebildet sein, die Zeitabhängigkeit auf der jeweiligen Skala außerhalb Zeigers (z.B., des Balkens) und/oder (beispielsweise direkt) neben dem Zahlenwert anzuzeigen. Die Steuerung kann dazu ausgebildet sein, die Zeitabhängigkeit bei diskreten Werten, die größer und/oder kleiner als der Zahlenwert sind, anzuzeigen.

Die Steuerung kann dazu ausgebildet sein, die Zeitabhängigkeit mittels eines Musters bei Werten, die größer und/oder kleiner als der Zahlenwert sind, anzuzeigen. Das Muster kann einen Verlauf eines Quermaßes entlang der ersten und/oder zweiten Skala umfassen oder implizieren. Das Quermaß kann zur jeweiligen Skala senkrechte sein. Das Quermaß kann auch als Höhe bezeichnet werden. Die Höhe kann quer zur Längsrichtung der jeweiligen Skala (z.B., senkrecht zu einer gezeigten oder impliziten Achse steigender Werte der Skala) angezeigt sein. Bei einer gekrümmten Skala (beispielsweise einer Skala entlang eines Kreisbogens) kann das Quermaß eine radiale Höhe sein.

Ein geradliniger Verlauf der Höhe kann eine Zeitabhängigkeit mit (beispielsweise gegenwärtiger) Konstanz des Zahlenwertes anzeigen. Der geradlinige Verlauf der Höhe kann auch als lineare Rampe bezeichnet werden. Die Zeitabhängigkeit mit (beispielsweise gegenwärtiger) Konstanz des Zahlenwertes kann auch als ein stationärer Zustand des Zahlenwertes bezeichnet werden. Alternativ oder ergänzend kann ein gekrümmter Verlauf der Höhe einer (beispielsweise gegenwärtigen) Zunahme und/oder Abnahme des Zahlenwertes entsprechen.

Die Steuerung kann dazu ausgebildet sein, die Zeitabhängigkeit auf der Skala bei Werten anzuzeigen, die kleiner als der Zahlenwert sind, falls die Zeitabhängigkeit eine zeitliche Zunahme des Zahlenwertes umfasst. Das Muster (beispielsweise der Verlauf des Quermaßes) kann ein Maximum aufweisen bei Werten, die kleiner als der Zahlenwert der Messgröße sind. Der Abstand zwischen dem Wert auf der Skala, welcher dem Maximum entspricht, und dem Zahlenwert kann ein Maß für die Rate der zeitlichen Zunahme des Zahlenwertes sein.

Die Steuerung kann dazu ausgebildet sein, die Zeitabhängigkeit auf der Skala bei Werten anzuzeigen, die größer als der Zahlenwert sind, falls die Zeitabhängigkeit eine zeitliche Abnahme des Zahlenwertes umfasst. Das Muster (beispielsweise der Verlauf des Quermaßes) kann einen streng-monoton fallenden Verlauf entlang der jeweiligen Skala oder einen Abfall entlang der jeweiligen Skala aufweisen bei Werten, die größer als der Zahlenwert der Messgröße sind. Der fallende Verlauf oder Abfall kann auch als Schweif bezeichnet werden. Die Länge des Schweifes entlang der jeweiligen Skala kann ein Maß für die Rate der zeitlichen Abnahme des Zahlenwertes sein.

Die Messgröße kann einer dynamischen Größe des Fahrzeugs, einer Fahrtgeschwindigkeit des Fahrzeugs, einer Leistungsbilanz eines Antriebstrangs des Fahrzeugs und/oder einer Drehzahl eines Antriebstrangs des Fahrzeugs entsprechen. Die Messgröße des Fahrzeugs kann eine Größe sein, die vom Fahrbetrieb abhängt und/oder die im Fahrbetrieb sowohl zeitweise zunimmt als auch zeitweise abnimmt. Ausführungsbeispiele der Vorrichtung sind für jedes Instrument (insbesondere jedes Rundinstrument) eines Kombi-Instruments einsetzbar.

Die Zusatzinformation kann einen Sollwert oder Sollbereich (beispielsweise eine Sollbeschleunigung und/oder einer Sollverzögerung) umfassen und/oder eine Einhaltung oder ein Verlassen des Sollwertes oder des Sollbereichs anzeigen. Das stationäre Muster kann ein Muster sein, das nicht mit der Zeit zerfließt. Das stationäre Muster kann zusammenhängend mit dem Zahlenwert (insbesondere mit dem Balken oder Zeiger) entlang der jeweiligen Skala bewegt werden, ohne seine Form zu verändern.

Die Sollbeschleunigung kann einer ökonomischen Fahrweise entsprechen. Eine ökonomische Fahrweise kann durch eine obere Schranke an die Beschleunigung vorbestimmt sein.

Die obere Schranke der Beschleunigung kann einer (beispielsweise hinsichtlich Wirkungsgrad) optimalen Beschleunigung entsprechen. Die Sollbeschleunigung kann eine Beschleunigung sein, bei der ein Getriebe oder andere Komponenten des Antriebsstrangs optimale Schaltpunkte nutzen (beispielsweise beim Einsatz einer Brennkraftmaschine) und/oder bei der nur rekuperierte Energie das Fahrzeug beschleunigt antreibt (beispielsweise beim Einsatz eines elektrischen Antriebs), und/oder bei der nur elektrisch angetrieben wird und noch nicht eine Brennkraftmaschine zugeschaltet wird (beispielsweise bei einem Hybridantrieb mit Elektromaschine und Brennkraftmaschine).

Alternativ oder ergänzend kann eine ökonomische Fahrweise durch eine obere Schranke an die Verzögerung (d.h. eine negative untere Schranke an die Beschleunigung) vorbestimmt sein. Die obere Schranke der Verzögerung kann einem Übergang von einer mittels Rekuperation (d.h., mittels einer als Generator betriebenen Elektromaschine) bewirkten Verzögerung oder simulierten Bremse zu einer dissipativen Bremse entsprechen. Die Sollverzögerung kann einer verschleißfreien Verzögerung und/oder einer Verzögerung ohne Einsatz einer Betriebsbremse entsprechen. Die Betriebsbremse oder die dissipative Bremse kann eine Reibbremse (beispielsweise durch Reibung von Bremsbacken an einer Bremsscheibe), eine Viskositätsbremse oder eine Wirbelstrombremse umfassen.

Gemäß einem weiteren Aspekt ist ein Fahrzeug, beispielsweise ein Landfahrzeug oder ein Wasserfahrzeug, bereitgestellt, das eine Vorrichtung gemäß einer Ausführung des Vorrichtungsaspekts umfasst. Das Landfahrzeug kann insbesondere ein Nutzfahrzeug (beispielsweise ein Bus, ein Lastkraftwagen oder eine Zugmaschine) sein. Zumindest die Anzeige der Vorrichtung oder die Vorrichtung kann in einem Fahrerhaus des Fahrzeugs angeordnet sein.

Weitere Merkmale und Vorteile der Erfindung werden im Folgenden unter Bezugnahme auf die beigefügten Zeichnungen beschrieben. Es zeigen:
- Figur 1: eine schematische Ansicht eines ersten Ausführungsbeispiels der Vorrichtung zum Anzeigen einer Messgröße in einem beispielhaften ersten Modus;
- Figur 2: eine schematische Ansicht eines ersten Ausführungsbeispiels der Vorrichtung zum Anzeigen einer Messgröße in einem beispielhaften zweiten Modus;
- Figur 3: eine schematische Ansicht eines zweiten Ausführungsbeispiels der Vorrichtung zum Anzeigen einer Messgröße in einem Beispiel des ersten Modus;
- Figur 4: eine schematische Ansicht eines zweiten Ausführungsbeispiels der Vorrichtung zum Anzeigen einer Messgröße in einem ersten Beispiel des zweiten Modus; und
- Figur 5: eine schematische Ansicht eines zweiten Ausführungsbeispiels der Vorrichtung zum Anzeigen einer Messgröße in einem zweiten Beispiel des zweiten Modus.

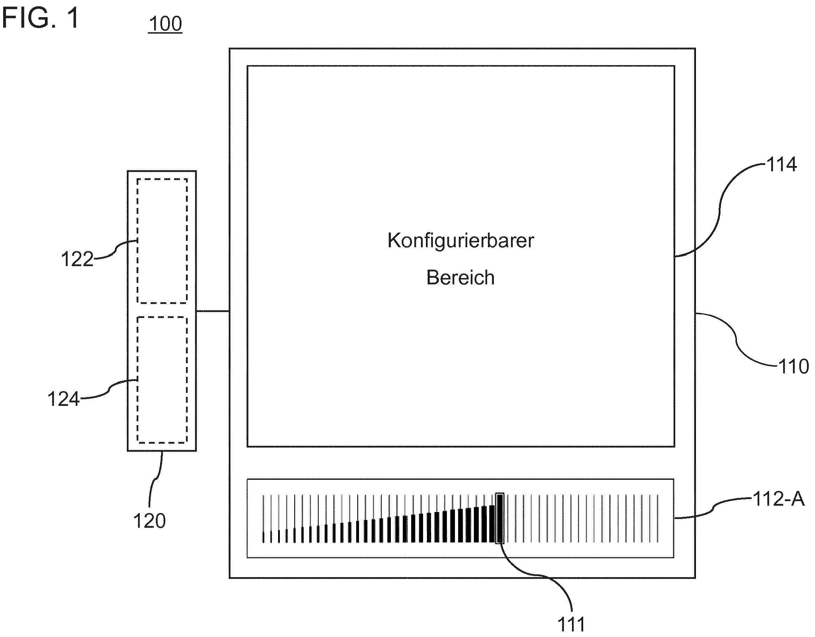

Figur 1 zeigt eine schematische Ansicht eines ersten Ausführungsbeispiels einer allgemein mit Bezugszeichen 100 bezeichneten Vorrichtung zum Anzeigen einer Messgröße an einem Fahrerplatz eines Fahrzeugs. Das Fahrzeug ist vorzugsweise ein Nutzfahrzeug. Die Vorrichtung 100 umfasst eine Anzeige 110, die eine erste Skala 112-A der Messgröße und wahlweise ein Informationsfeld 114 benachbart zur ersten Skala 112-A anzeigt. Ferner umfasst die Vorrichtung 100 eine zum Steuern der Anzeige 110 mit der Anzeige 110 in Signalaustausch stehende oder bringbare Steuerung 120. Die Steuerung erfasst einen Zahlenwert 111 der Messgröße. In einem ersten Modus bewirkt die Steuerung 120, dass auf der ersten Skala 112-A der Zahlenwert 111 angezeigt wird.

Die Steuerung 120 kann eine Einheit 122 zur Signalverarbeitung, beispielsweise mindestens einen Prozessor und einen mit diesem in Datenaustausch stehenden Speicher umfassen. Ferner kann die Steuerung 120 eine Einheit 124 zur Benutzereingabe durch die Fahrerin oder den Fahrer des Fahrzeugs umfassen.

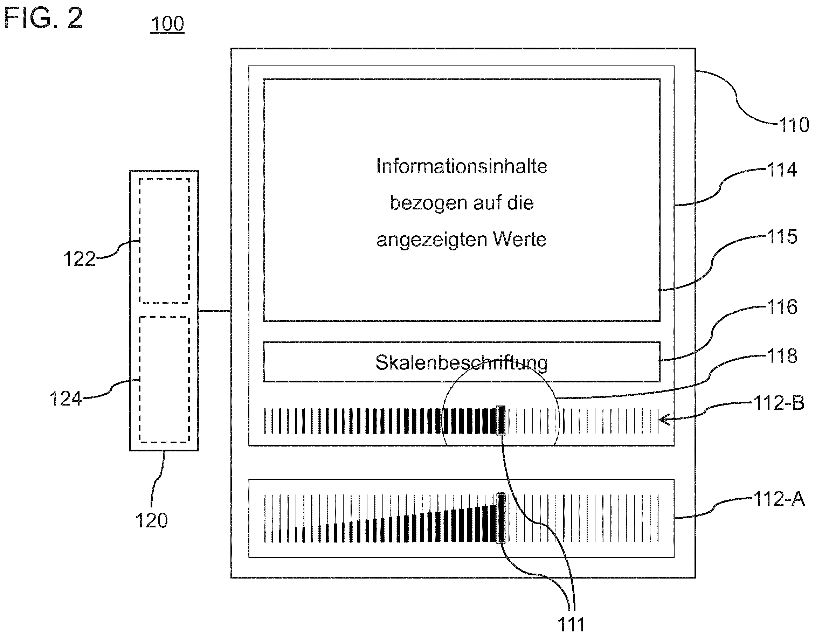

In einem in Figur 2 beispielhaft gezeigten zweiten Modus bewirkt die Steuerung 120, dass im Informationsfeld 114 auf einer von der ersten Skala 112-A beabstandeten zweiten Skala 112-B derselbe Zahlenwert 111 angezeigt wird, vorzugsweise zusätzlich und zeitgleich zum Anzeigen des Zahlenwerts auf der ersten Skala 112-A. Das Anzeigen des Zahlenwerts 111 auf der zweiten Skala 112-B entspricht einer geometrischen Fortsetzung des Anzeigens des Zahlenwerts 111 auf der ersten Skala 112-A.

Optional zeigt zumindest die erste Skala 112-A eine Zeitabhängigkeit der Messgröße durch einen Schweif bei Werten an, die im Fall einer Zunahme der Messgröße kleiner bzw. im Fall einer Abnahme der Messgröße größer als der Zahlenwert der Messgröße sind.

Der (in Figur 2 exemplarisch dargestellte) zweite Modus unterscheidet sich vom (in Figur 1 exemplarisch dargestellten) ersten Modus durch Informationsinhalte 115 im Informationsfeld 114, die auf die auf den Skalen 112-A und 112-B angezeigte Messgröße bezogen sind, und/oder durch eine Skalenbeschriftung 116, die vorzugsweise an die zweite Skala 112-A im Informationsfeld 114 angrenzt.

Vorzugsweise ist der Zahlenwert 111 auf jeder der Skala 112-A und 112-B durch einen Zeiger oder Balken angezeigt. In dem in Figur 2 gezeigten ersten Ausführungsbeispiel umfasst die geometrische Fortsetzung ein Fluchten der Balken zum Anzeigen desselben Zahlenwerts auf der jeweiligen Skala 112-A und 112-B.

Der Zeiger oder Balken kann breiter und/oder heller sein als jeder Balken oder Strich der jeweiligen Skalen 112-A und 112-B bei anderen Werten als dem Zahlenwert 111. Alternativ oder ergänzend ist der den Zahlenwert 111 repräsentierende Zeiger oder Balken durch eine Umrandung oder einen Helligkeitsschein 118 (der auch als "Glow" bezeichnet wird) gegenüber den Balken oder Strichen der jeweiligen Skala 112-A bzw. 112-B hervorgehoben. Der Helligkeitsschein 118 erweitert den Bereich des Zeigers oder Balkens und hebt so den Zahlenwert 111 der Messgroße auf der zweiten Skala 112-B hervor.

Der erste Modus oder ein Übergang vom zweiten Modus in den ersten Modus ermöglicht eine reduzierte bzw. reduzierbare Skalenansicht der Messgröße. Der zweite Modus oder ein Übergang vom ersten Modus in den zweiten Modus ermöglicht eine erweiterte bzw. erweiterbare Skalenansicht der Messgröße.

Der in Figur 1 beispielhaft gezeigte erste Modus ermöglicht eine grafische Skalenanzeige mit sehr reduzierter oder ohne Skalenbeschriftung 116, und dient vorzugsweise einer beruhigten Darstellung der Messgröße. Danebenliegend befindet sich das Informationsfeld 114, d.h., ein zusätzlich konfigurierbarer Anzeigebereich. Das Informationsfeld 114 kann beispielsweise von einem Bordcomputer als Anzeige genutzt werden.

Der Anzeigebereich des Informationsfelds 114 wird, wie in Figur 2 beispielhaft gezeigt, im zweiten Modus bedarfsweise genutzt, um eine Skalenbeschriftung 116 und im Zusammenhang stehende weitere Informationen 115 einzublenden. Die Verbindung zwischen den räumlich getrennten Anzeigeflächen der ersten Skala 112-A und des Informationsfelds 114 wird erreicht durch die grafische Fortsetzung der ersten Skala 112-A (beispielsweise durch Skalierung) samt Skalenbeschriftung 116 und Zeigerbewegung. Zudem kann der Zeiger 118 auf der zweiten Skala 112-B von einer Hervorhebung 118 begleitet sein, beispielsweise vom Helligkeitsschein (auch: "Glow"), der ähnlich einem Scheinwerferlicht mit jedem Ausschlag des Zahlenwertes 111 mitwandert.

Durch die erweiternde Nutzung einer benachbarten Anzeigeflächen als Informationsfeld 114 können Informationen auf einer größeren Fläche oder einem größeren Raum verteilt werden, um der Fahrerin oder dem Fahrer eine gut erfassbare Strukturierung der Inhalte und eine gute Ablesbarkeit gewährleisten zu können.

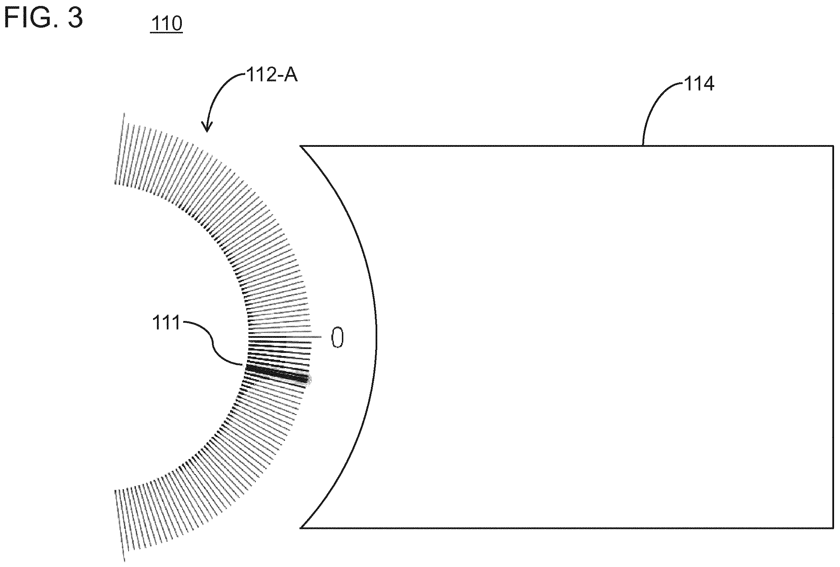

Die Figuren 3 bis 5 zeigen schematisch ein zweites Ausführungsbeispiel der Vorrichtung 100, wobei einzelne Merkmale des zweiten Ausführungsbeispiels mit den des ersten Ausführungsbeispiels übereinstimmen können oder austauschbar sind. Insbesondere können mit gleichen Bezugszeichen gekennzeichnete Merkmale austauschbare oder übereinstimmende Merkmale sein. Die Steuerung 120 ist zur besseren Übersichtlichkeit nicht dargestellt.

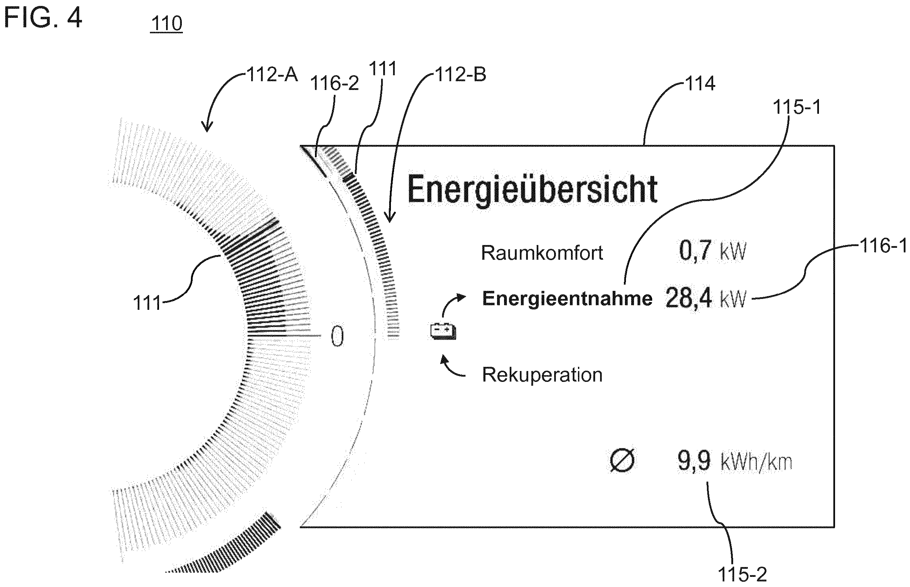

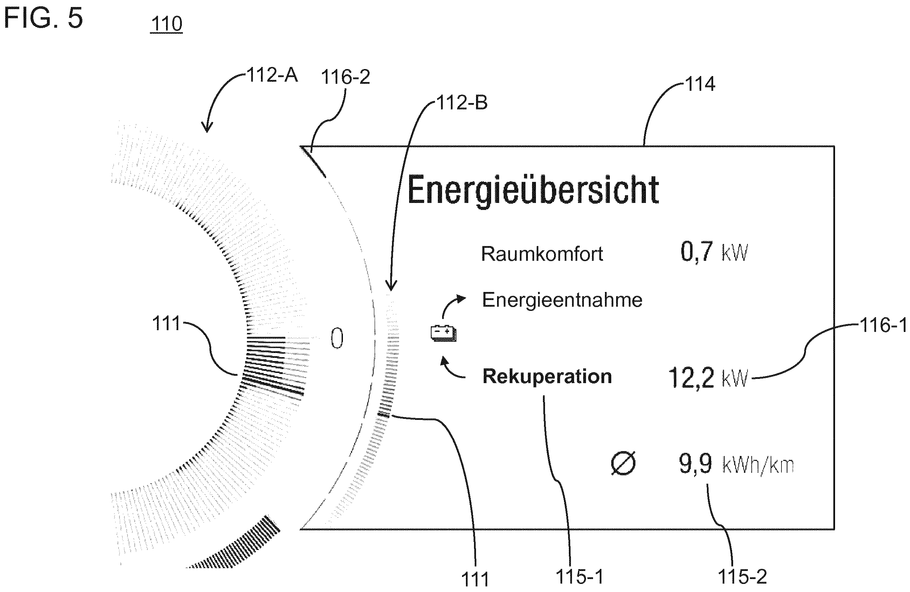

Die Figur 3 zeigt ein Beispiel des ersten Modus. Im zweiten Ausführungsbeispiel ist das Informationsfeld 114 im ersten Modus leer und/oder dunkel. Die Figuren 4 und 5 zeigen jeweils ein Beispiel des zweiten Modus der Vorrichtung 100.

Die in jeder der Figuren 3 bis 5 gezeigte Skala 112-A und (soweit die Vorrichtung 100 im zweiten Modus betrieben ist) die Skala 112-B sind jeweils gekrümmt, vorzugsweise jeweils entlang eines Kreisbogens. Ein Brennpunkt oder Kreismittelpunkt der Kreisbögen ist identisch. Die Krümmungsradien der Kreisbögen sind verschieden, wodurch die Skalen 112-A und 112-B voneinander beabstandet sind.

Das Fahrzeug kann ein Elektrofahrzeug mit einem elektrischen Antriebsstrang sein. Das Fahrzeug kann einen Traktionsenergiespeicher umfassen, der den elektrischen Antriebsstrang speist und/oder aus diesem Energie (beispielsweise bei Talfahrt oder Bremsvorgängen) rekuperiert. Insbesondere kann das Fahrzeug ein Elektrobus sein. Die in den Figuren 4 und 5 gezeigten Beispiele des zweiten Modus umfassen als Beispiel des Inhalts 115 mit Bezug zur Messgröße eine Kategorie 115-1 des Zahlenwerts (beispielsweise "Rekuperation" bei negativem Vorzeichen und "Energieentnahme" bei positivem Vorzeichen des Zahlenwerts) und/oder einen Durchschnittsverbrauch 115-2 (beispielsweise ein Mittelwert der Messgröße).

Alternativ oder ergänzend umfassen die in den Figuren 4 und 5 gezeigten Beispiele des zweiten Modus als Skalenbeschriftung eine physikalische Einheit 116-1 (beispielsweise kW für die Leistung als Messgröße) und/oder einen oder mehrere Grenzwerte, Sollwerte und/oder Sollbereiche der Messgröße. Beispielsweise kann die Messgröße einen Leistungsfluss des Traktionsenergiespeichers umfassen. Ein angezeigter Grenzwert 116-2 kann eine obere Schranke für eine Leistungsentnahme aus dem Traktionsenergiespeicher sein. Durch den Grenzwert oder weitere Grenzwerte kann ein Sollbereich des Leistungsflusses angezeigt sein. Beispielsweise kann der Sollbereich einer ökonomischen und/oder ökologischen Fahrweise entsprechen.

Die Messgröße kann eine dynamische Größe des Fahrbetriebs sein, die beispielsweise im Fahrbetrieb zeitweise zunimmt und zeitweise abnimmt. Alternativ oder ergänzend kann die Messgröße ein im Fahrbetrieb monoton-fallend sein, beispielsweise ein Füllstand oder ein Ladezustand. Insbesondere im letzteren Fall kann der Schweif neben dem Zahlenwert entfallen.

### Bezugszeichenliste

- 100: Vorrichtung zum Anzeigen einer Messgröße
- 110: Anzeige der Vorrichtung
- 111: Zahlenwert der Messgröße
- 112-A: Erste Skala der Vorrichtung außerhalb des Informationsfelds
- 112-B: Zweite Skala der Vorrichtung innerhalb des Informationsfelds
- 114: Informationsfeld der Vorrichtung
- 115: Inhalt im Informationsfeld mit Bezug zur Messgröße
- 116: Skalenbeschriftung der zweiten Skala
- 118: Hervorhebung des Zahlenwertes
- 120: Steuerung der Vorrichtung
- 122: Einheit zur Signalverarbeitung
- 124: Einheit zur Benutzereingabe

## Patentansprüche

1. Vorrichtung (100) zum Anzeigen einer Messgröße an einem Fahrerplatz eines Fahrzeugs, insbesondere eines Nutzfahrzeugs, umfassend:
eine Anzeige (110), die dazu ausgebildet ist, eine erste Skala (112-A) der Messgröße und wahlweise ein Informationsfeld (114) benachbart zur ersten Skala (112-A) anzuzeigen; und
eine zum Steuern der Anzeige (110) mit der Anzeige (110) in Signalaustausch stehende oder bringbare Steuerung (120), die dazu ausgebildet ist, einen Zahlenwert (111) der Messgröße zu erfassen, in einem ersten Modus auf der ersten Skala (112-A) den Zahlenwert (111) anzuzeigen, und in einem zweiten Modus, zusätzlich zum Anzeigen des Zahlenwerts (111) auf der ersten Skala (112-A), im Informationsfeld (114) auf einer von der ersten Skala (112-A) beabstandeten zweiten Skala (112-B) den Zahlenwert (111) anzuzeigen,
**dadurch gekennzeichnet, dass**
das Anzeigen des Zahlenwerts (111) auf der zweiten Skala (112-B) einer geometrischen Fortsetzung des Anzeigens des Zahlenwerts (111) auf der ersten Skala (112-A) entspricht, wobei ein Zeiger des Zahlenwerts (111) auf der ersten Skala (112-A) in Flucht steht mit einem Zeiger des Zahlenwerts (111) auf der zweiten Skala (112-B).

2. Vorrichtung nach Anspruch 1, wobei die erste Skala (112-A) und die zweite Skala (112-B) gekrümmt sind, und die geometrische Fortsetzung einer radialen Fortsetzung entspricht.

3. Vorrichtung nach Anspruch 1 oder 2, wobei die erste Skala (112-A) und die zweite Skala (112-B) geradlinig und zueinander parallel sind, und die geometrische Fortsetzung einer zu den Skalen (112-A, 112-B) orthogonalen Fortsetzung entspricht.

4. Vorrichtung nach einem der Ansprüche 1 bis 3, wobei die Steuerung (120) ferner dazu ausgebildet ist, im zweiten Modus im Informationsfeld (114) den Zahlenwert (111) der Messgröße numerisch anzuzeigen und/oder eine Skalenbeschriftung (116) einzublenden.

5. Vorrichtung nach einem der Ansprüche 1 bis 4, wobei die Steuerung (120) ferner dazu ausgebildet ist, im zweiten Modus im Informationsfeld (114) einen der Messgröße und/oder dem Zahlenwert (111) zugeordneten Inhalt (115) anzuzeigen.

6. Vorrichtung nach einem der Ansprüche 1 bis 5, wobei die Steuerung (120) ferner dazu ausgebildet ist, im zweiten Modus im Informationsfeld (114) eine dem Zahlenwert (111) zugeordnete Kategorie anzuzeigen.

7. Vorrichtung nach einem der Ansprüche 1 bis 6, wobei die Steuerung (120) ferner dazu ausgebildet ist, in einem dritten Modus, zusätzlich zum Anzeigen des Zahlenwerts (111) auf der ersten Skala (112-A), im Informationsfeld (114) mindestens eine von der Messgröße der ersten Skala (112-A) verschiedene zweite Messgröße anzuzeigen.

8. Vorrichtung nach Anspruch 7, wobei das Informationsfeld (114) im dritten Modus keine zweite Skala (112-B) der Messgröße umfasst, im Informationsfeld (114) die zweite Messgröße numerisch angezeigt ist, und/oder im Informationsfeld (114) eine der zweiten Messgröße zugeordnete Kategorie angezeigt ist.

9. Vorrichtung nach einem der Ansprüche 1 bis 8, wobei im ersten Modus das Informationsfeld (114) leer ist.

10. Vorrichtung nach einem der Ansprüche 1 bis 9, wobei die Steuerung (120) ferner dazu ausgebildet ist, in Reaktion auf eine Eingabe eines Fahrers des Fahrzeugs zwischen den Modi umzuschalten.

11. Vorrichtung nach einem der Ansprüche 1 bis 10, wobei die erste Skala (112-A) und/oder die zweite Skala (112-B) diskrete Werte umfasst und die Steuerung (120) dazu ausgebildet ist, den Zahlenwert (111) mittels eines Balkens oder Zeigers am dem Zahlenwert (111) entsprechenden diskreten Wert der ersten Skala (112-A) und/oder der zweiten Skala (112-B) anzuzeigen.

12. Vorrichtung nach einem der Ansprüche 1 bis 11, wobei die Anzeige (110) an einem Kombi-Instrument und/oder einer Mittelkonsole angeordnet oder anordenbar ist, und/oder eine Head-Up-Anzeige umfasst oder nutzt.

13. Nutzfahrzeug, umfassend ein Fahrerhaus, in dem eine Vorrichtung gemäß einem der Ansprüche 1 bis 12 angeordnet ist.

## Claims

1. Device (100) for displaying a measured variable at a driver's position of a vehicle, preferably a commercial vehicle, comprising:
a display (110) configured to display a first scale (112-A) of the measured variable and selectively an information field (114) adjacent to the first scale (112-A); and
a controller (120) which is or can be brought into signal exchange with the display (110) for controlling the display (110) and which is configured to detect a numerical value (111) of the measured variable, to display the numerical value (111) on the first scale (112-A) in a first mode, and to display the numerical value (111) in the information field (114) on a second scale (112-B) spaced apart from the first scale (112-A) in a second mode, in addition to displaying the numerical value (111) on the first scale (112-A),
**characterized in that**
the display of the numerical value (111) on the second scale (112-B) corresponds to a geometric continuation of the display of the numerical value (111) on the first scale (112-A).

2. The device according to claim 1, wherein the first scale (112-A) and the second scale (112-B) are curved, and the geometric continuation corresponds to a radial continuation.

3. The device according to claim 1 or 2, wherein the first scale (112-A) and the second scale (112-B) are rectilinear and parallel to each other, and the geometric continuation corresponds to a orthogonal continuation to the scales (112-A, 112-B).

4. The device according to any one of claims 1 to 3, wherein the controller (120) is further configured to numerically display the numerical value (111) of the measured variable in the information field (114) in the second mode and/or to display a scale label (116).

5. The device according to any one of claims 1 to 4, wherein the controller (120) is further configured to display, in the second mode, a content (115) associated with the measured variable and/or the numerical value (111) in the information field (114).

6. The device according to any one of claims 1 to 5, wherein the controller (120) is further configured to display a category associated with the numerical value (111) in the information field (114) in the second mode.

7. The device according to any one of claims 1 to 6, wherein the controller (120) is further configured to display, in a third mode, in addition to displaying the numerical value (111) on the first scale (112-A), in the information field (114) at least one second measured variable different from the measured variable of the first scale (112-A).

8. The device according to claim 7, wherein the information field (114) in the third mode does not comprise a second scale (112-B) of the measured variable, the second measured variable is displayed numerically in the information field (114), and/or a category assigned to the second measured variable is displayed in the information field (114).

9. The device according to any one of claims 1 to 8, wherein in the first mode the information field (114) is empty.

10. The device according to any one of claims 1 to 9, wherein the controller (120) is further configured to switch between the modes in response to an input from a driver of the vehicle.

11. The device according to any one of claims 1 to 10, wherein the first scale (112-A) and/or the second scale (112-B) comprises discrete values and the controller (120) is configured to indicate the numerical value (111) by means of a bar or pointer at the discrete value of the first scale (112-A) and/or the second scale (112-B) corresponding to the numerical value (111).

12. The device according to any one of claims 1 to 11, wherein the display (110) is arranged or arrangeable on an instrument cluster and/or a center console, and/or comprises or uses a head-up display.

13. A commercial vehicle comprising a cab in which a device according to any one of claims 1 to 12 is arranged.

## Revendications

1. Dispositif (100) pour afficher une valeur mesurée au niveau du poste de conduite d'un véhicule, en particulier d'un véhicule utilitaire, comprenant :
un afficheur (110) qui est conçu pour afficher une première échelle (112-A) de la valeur mesurée, et, optionnellement, un champ d'information (114) adjacent à la première échelle (112-A) ; et
une commande (120) qui est en communication d'échange de signaux avec l'affichage (110) pour commander l'affichage (110), et qui est conçue pour saisir une valeur numérique (111) de la valeur mesurée, pour afficher la valeur numérique (111) sur la première échelle (112-A) dans un premier mode et, dans un deuxième mode, en plus de l'affichage de la valeur numérique (111) sur la première échelle (112-A), d'afficher la valeur numérique (111) dans le champ d'information (114) sur une deuxième échelle (112-B) espacée de la première échelle (112-A),
**caractérisé en ce que**
l'affichage de la valeur numérique (111) sur la deuxième échelle (112-B) correspond à une continuation géométrique de l'affichage de la valeur numérique (111) sur la première échelle (112-A), un pointeur de la valeur numérique (111) sur la première échelle (112-A) étant aligné avec un pointeur de la valeur numérique (111) sur la deuxième échelle (112-B).

2. Dispositif selon la revendication 1, dans lequel la première échelle (112-A) et la deuxième échelle (112-B) sont courbes et correspondent à la continuation géométrique d'une continuation radiale.

3. Dispositif selon la revendication 1 ou la revendication 2, dans lequel la première échelle (112-A) et la deuxième échelle (112-B) sont rectilignes et parallèles entre elles, et la continuation géométrique correspond à une continuation orthogonale aux échelles (112-A, 112-B).

4. Dispositif selon l'une des revendications 1 à 3, dans lequel la commande (120) est en outre conçue pour, dans le deuxième mode, afficher numériquement dans le champ d'information (114) la valeur numérique (111) de la valeur mesurée et/ou pour afficher une légende d'échelle (116).

5. Dispositif selon l'une des revendications 1 à 4, dans lequel la commande (120) est en outre conçue pour, dans le deuxième mode, afficher dans le champ d'information (114) un contenu (115) associé à la valeur mesurée et/ou à la valeur numérique (111).

6. Dispositif selon l'une des revendications 1 à 5, dans lequel la commande (120) est en outre conçue pour afficher dans le champ d'information (114) une catégorie associée à la valeur numérique (111) dans le deuxième mode.

7. Dispositif selon l'une des revendications 1 à 6, dans lequel la commande (120) est en outre conçue pour afficher dans un troisième mode, en plus d'afficher la valeur numérique (111) sur la première échelle (112-A), au moins une deuxième valeur mesurée différente de la valeur mesurée de la première échelle (112-A) dans le champ d'information (114).

8. Dispositif selon la revendication 7, dans lequel le champ d'information (114) ne comprend pas de deuxième échelle (112-B) de la valeur mesurée dans le troisième mode, la deuxième valeur mesurée est affichée numériquement dans le champ d'information (114), et/ou une catégorie associée à la deuxième valeur mesurée est affichée dans le champ d'information (114).

9. Dispositif selon l'une des revendications 1 à 8, dans lequel le champ d'information (114) est vide dans le premier mode.

10. Dispositif selon l'une des revendications 1 à 9, dans lequel la commande (120) est en outre conçue pour commuter entre les modes en réponse à une entrée effectuée par un conducteur du véhicule.

11. Dispositif selon l'une des revendications 1 à 10, dans lequel la première échelle (112-A) et/ou la deuxième échelle (112-B) comprend des valeurs discrètes et la commande (120) est conçue pour afficher la valeur numérique (111) au moyen d'une barre ou d'un pointeur sur la valeur numérique (111) correspondant à la valeur discrète de la première échelle (112-A) et/ou de la deuxième échelle (112-B).

12. Dispositif selon l'une des revendications 1 à 11, dans lequel l'affichage (110) est agencé ou apte à être agencé sur un combiné d'instruments et/ou une console centrale, et/ou comprend ou utilise un affichage tête haute.

13. Véhicule utilitaire comprenant une cabine de conduite dans laquelle est agencé un dispositif selon l'une des revendications 1 à 12.
